# EUROPEAN PATENT SPECIFICATION

(11) **EP 2 431 620 B1**
(45) Date of publication and mention of the grant of the patent: **05.03.2014**
(21) Application number: 09844651.1
(22) Date of filing: 16.11.2009
(51) Int. Cl.: B66C 1/66, F16B 45/00, F16B 35/00

(54) **Swingable connecting device**
Schwenkbare Anschlußvorrichtung
Dispositif de connection pivotable

(30) Priority: 15.05.2009 JP 2009118808
(43) Date of publication of application: 21.03.2012
(73) Proprietor: Naniwa Iron Works Co., Ltd., Osaka-shi, Osaka 552-0007 (JP)
(72) Inventor: HORIKAWA Masao, Sakai-shi Osaka 590-0113 (JP); KITANO Hiroki, Osaka-shi Osaka 552-0004 (JP)
(74) Representative: Solf, Alexander
(86) International application number: PCT/JP2009/069441
(87) International publication number: WO 2010/131381

(56) References cited:
- JP-A- 2002 154 781
- JP-A- 2002 154 781
- JP-A- 2002 332 187
- JP-A- 2008 143 685
- JP-A- 2009 067 567
- JP-U- 61 184 112
- JP-U- H01 180 488
- US-A1- 2002 164 198
- US-B1- 6 199 925
- US-B1- 6 349 985

## Description

### TECHNICAL FIELD

The present invention relates to a swingable connecting device comprising a shackle; a supporting body capable of being screwed to a target object through a mounting bolt; and an oscillation supporting mechanism for swingably supporting the shackle to the supporting body, the oscillation supporting mechanism being formed by providing a retainer member for allowing connecting holes formed in a pair of leg portions of the shackle to fit on a pair of shaft portions integrally formed with the supporting body and having smooth outer circumferential surfaces, thereby to prevent the leg portions from removing from the shaft portions.

### BACKGROUND ART

The documents US 6,199,925 B1 and US 2002/0164198 A1 both disclose a swingable connecting device comprising: a shackle; a supporting body capable of being screwed to a target object through a mounting bolt, and an oscillation supporting mechanism for swingably supporting the shackle to the supporting body; wherein the mounting bolt is a double-ended bolt having a large-diameter first male threaded portion and a small-diameter second male threaded portion formed separately at opposite ends thereof and having different diameters from each other, wherein the large-diameter first male threaded portion serves as a connecting portion relative to the target object, wherein the supporting body is provided with a bolt hole for allowing the bolt shaft portion to fit into and engage with the bolt bore, through which the small-diameter second male threaded portion extends, and wherein a nut is screwed to the second male threaded portion extending through the bolt bore with the bolt shaft portion being fitted to the bolt bore, thereby to retain the mounting bolt to be integrally connected to the supporting body.

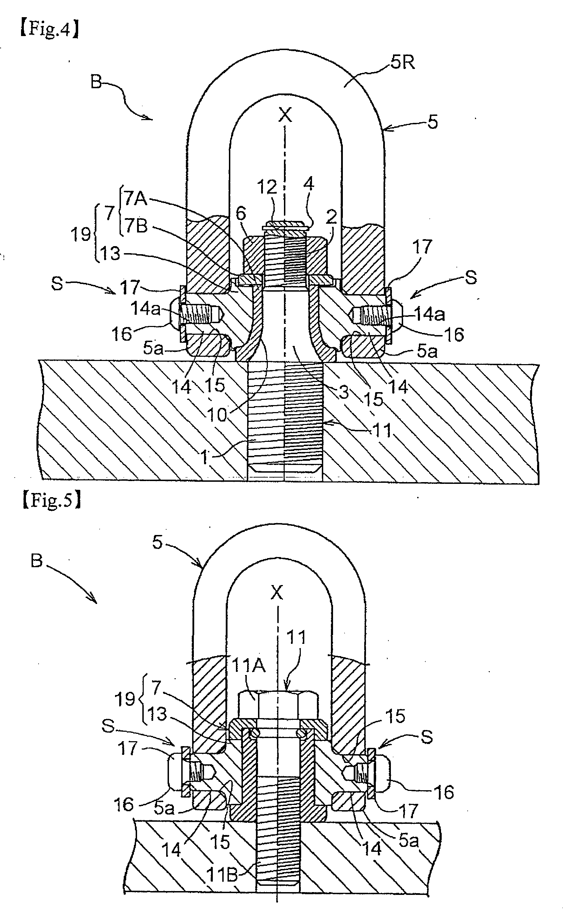

As shown in Fig. 5, a conventional swingable connecting device includes a mounting bolt 11 having a large-diameter head portion for rotating operation at one end portion thereof and a male threaded portion 11B wit a constant diameter at the other end portion thereof. The mounting bolt 11 is configured to extend through a bolt bore formed in a supporting body 19 and is screwed to a target object, thereby to swingably attach the shackle 5 to the target object through the supporting body 19 (see JP 2002-154781 A).

### SUMMARY OF INVENTION

### Technical Problem

The conventional swingable connecting device noted above (see JP 2002-154781 A) can be suspended by engaging the shackle 5 with a hook. The diameter of the mounting bolt 11 to be screwed to the target object is fixed depending on a dimension between a pair of leg portions 5a of the shackle 5. Thus, if a threaded bore formed in advance in the target object has a large diameter, it is required to attach a large-diameter mounting bolt 11 corresponding to such a large-diameter threaded bore. In this, it is necessary to use the supporting body 19 having the shackle 5 defining an increased dimension between the leg portions 5a to correspond to the diameter of the mounting bolt 11, which would make the connecting device heavy and decrease the handling efficiency and result in an expensive product.

The object of the present invention is to provide a swingable connecting device having a supporting body to be attached to a large-diameter threaded bore formed in a target object without changing the size of the shackle or the supporting body.

### Solution to Problem

A swingable connecting device of the present invention has a first characteristic feature as described below. The swingable connecting device of the present invention comprises a shackle, a supporting body capable of being screwed to a target object through a mounting bolt, and an oscillation supporting mechanism for swingably supporting the shackle to the supporting body. In the oscillation supporting mechanism, a pair of shaft portions integrally formed with the supporting body and having smooth outer circumferential surfaces are fitted to connecting holes formed in a pair of leg portions of the shackle. A retainer member is provided in the fitting portion for preventing the leg portions from removing from the shaft portions. The mounting bolt is a double-ended bolt having a large-diameter first male threaded portion and a small-diameter second male threaded portion formed separately at opposite ends thereof and having different diameters from each other. A bolt shaft portion whose diameter varies continuously from the first male threaded portion to the second male threaded portion is formed between the first male threaded portion and the second male threaded portion. The large-diameter first male threaded portion serves as a connecting portion relative to the target object. The supporting body is provided with a bolt hole for allowing the bolt shaft portion to fit into and engage with the bolt bore, through which the small-diameter second male threaded portion extends. The bolt bore has an inner surface profile, in which an inner diameter thereof continuously varies with an outer circumferential surface of the bolt shaft portion. The bolt shaft portion is fitted to the bolt bore, and a nut is screwed to the second male threaded portion extending through the bolt bore. As a result, the mounting bolt is integrally connected to the supporting body to prevent the mounting bolt from removing from the supporting body.

According to the first characteristic feature of the present invention, the mounting bolt is formed as the double-ended bolt in which the small-diameter second male threaded portion has the same diameter as that of the conventional mounting bolt to extend through the bolt bore of the supporting body and to be screwed by the nut. This allows the mounting bolt to be attached to the supporting body without changing the size of the supporting body or the shackle. As a result, it is prevented or suppressed that the entire device becomes heavy, and the handling efficiency is satisfactorily maintained.

On the other hand, the first male threaded portion has a diameter different from that of the second male threaded portion to provide the connecting portion to be screwed to the large-diameter bolt bore of the target object.

For example, if the connecting device is pulled from a direction perpendicular to the axis of the mounting bolt in an attempt to lift the target object by engaging the hook with the shackle swingably supported to the supporting body, a bending force exerted on the mounting bolt is concentrated at a stepped portion formed between the first male threaded portion and the second male threaded portion having different diameters from each other, which would easily break the mounting bolt. According to the present invention, the bolt shaft portion is formed to vary its diameter continuously from the first male threaded portion to the second male threaded portion, while the bolt bore has an inner surface profile, in which an inner diameter thereof continuously varies with an outer circumferential surface of the bolt shaft portion. Therefore, the bolt shaft portion has no cut-away stepped portion at which stress, in particular, is easily concentrated, and thus even if bending stress is exerted on the bolt when the target object is lifted, such stress is not concentrated at one part but distributed to be transmitted to the supporting body.

As a result, the swingable connecting device having an increased bending bearing force can be provided.

A second characteristic feature of the present invention lies in that a rotation supporting mechanism is provided between the mounting bolt and the supporting body for supporting the shackle to the mounting bolt to be relatively rotatable about an axis of the mounting bolt.

According to the second characteristic of the present invention, in addition to the functions and effects achieved by the first characteristic feature noted above, the position or posture of the shackle is variable depending on the pulling direction, which would advantageously be user-friendly.

### BRIEF DESCRIPTION OF DRAWINGS

Fig. 1 is a partially cut-away front view of a swingable connecting device of the present invention;
Fig. 2 is a side view of the swingable connecting device of the present invention;
Fig. 3 is an exploded perspective view of the swingable connecting device of the present invention;
Fig. 4 is a partially cut-away front view of the swingable connecting device of the present invention according to a modified embodiment; and
Fig. 5 is a partially cut-away front view of a conventional swingable connecting device.

### MODE FOR CARRYING OUT INVENTION

An embodiment of the present invention will be described hereinafter in reference to the accompanying drawings.

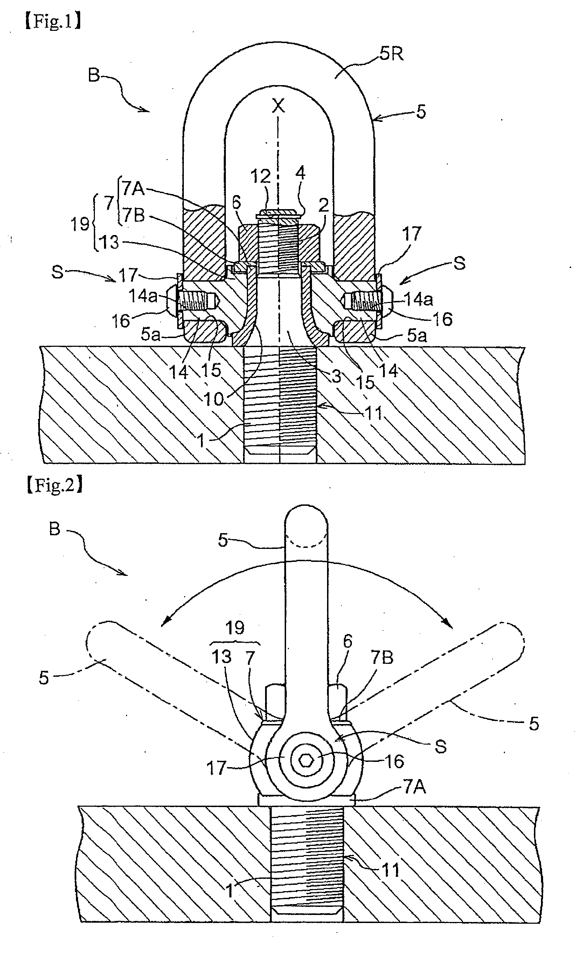

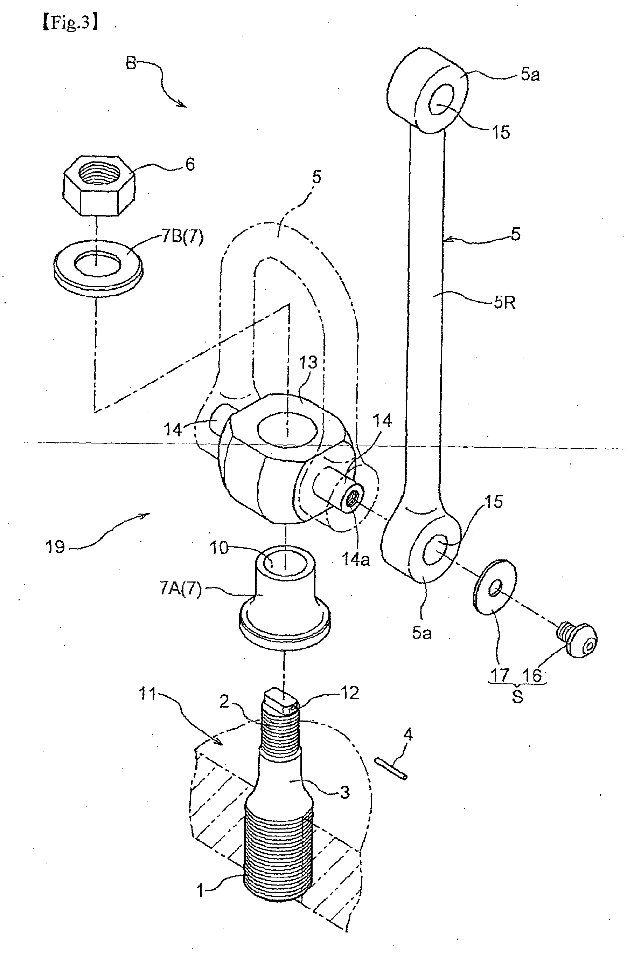

Figs. 1 and 2 show a swingable connecting device B in an assembled state, respectively. Fig. 3 is an exploded perspective view of the device.

The swingable connecting device includes a shackle 5, a supporting body 19 screw-engageable with a target object through a mounting bolt 11, and an oscillation supporting mechanism for swingably supporting the shackle 5 to the supporting body 19. The oscillation supporting mechanism is formed by providing a retainer member S for allowing connecting holes formed in a pair of leg portions 5a of the shackle 5 to fit on a pair of shaft portions 14 integrally formed with the supporting body 19 and having smooth outer circumferential surfaces, thereby to prevent the leg portions 5a from removing from the shaft portions 14.

The mounting bolt 11 is a double-ended bolt having a large-diameter first male threaded portion 1 and a small-diameter second male threaded portion 2 formed separately at opposite ends thereof and having different diameters from each other. A bolt shaft portion 3 whose diameter varies continuously from the first male threaded portion 1 to the second male threaded portion 2 is formed between the first male threaded portion 1 and the second male threaded portion 2. The large-diameter first male threaded portion 1 serves as a connecting portion relative to the target object. The supporting body 19 is provided with a bolt hole 10 for allowing the bolt shaft portion 3 to fit into and engage with the bolt bore 10. The small-diameter second male threaded portion 2 extends through the bolt bore 10, and has an inner surface profile, in which an inner diameter thereof continuously varies with an outer circumferential surface of the bolt shaft portion 3. A nut 6 is screwed to the second male threaded portion 2 extending through the bolt bore 10 with the bolt shaft portion 3 being fitted to the bolt bore 10, thereby to retain the mounting bolt 11 to be integrally connected to the supporting body 19.

The inversed U-shaped shackle 5 is formed by bending a linear shackle double-ended rod 5R shown in Fig. 3 at hot temperature (or at room temperature). In bending the rod, connecting bores 15 are fitted to the shaft portions 14 as well. More particularly, the shackle 5 is fixedly fitted on the shaft portions 14 and normally is not removed. However, when a considerable tensile load is applied to the shackle 5, the shackle 5 might be opened and deformed. Thus, a washer 17 is held in a threaded bore 14a formed in each of the shaft portions 14 through a screw 16 to form the retainer member S for preventing the leg portion 5a from removing from the shaft portion 14.

The threaded bore 14a with its pilot bore has an innermost portion that does not reach a root of the shaft portion 14. Thus, it is avoided that a cross section of the proximal root portion of the shaft portion 14, which receives a shearing force produced by the load from the shackle 5, is diminished. This also contributes to increase the shearing force.

The supporting body 19 has a boss member 7 having the bolt bore 10 formed in an inner side thereof, and a trunnion 13 fitted onto the boss portion 7. The trunnion 13 is fitted on the boss member 7 to be rotatable about a vertical axis X extending along the bolt axis, thereby to form a rotation supporting mechanism for supporting the shackle 5 to the mounting bolt 11 to be relatively rotatable about the axis.

The boss member 7 is formed by press-fitting connection between a bell-shaped lower boss 7A with the bolt bore 10 having a diameter increasing toward the lower side thereof, and a lid-shaped upper boss 7B provided with the bolt bore 10. The second male threaded portion 2 and the bolt shaft portion 3 of the mounting bolt 11 extend through both the bolt bores 10, while the nut 6 is screwed to the second male threaded portion 2, thereby to retain the mounting bolt 11 from removing from the supporting body 19.

In order to prevent the nut 6 from loosening and removing from the second male threaded portion 2, a retainer pin 4 is removably inserted into a pin hole 12 formed in the second male threaded portion 2 along a radial direction of the threaded portion.

### [Modified Embodiment]

A modified embodiment will be described hereinafter.

The diameter of the first male threaded portion 1 and the bolt bore 10 corresponding the diameter of the first male threaded portion 1 are variable in combination with the second male threaded portion 2, and may be formed to adapt to an existing bolt bore 10 formed in the target object.

Instead of press-fitting, the lower boss 7A and the upper boss 7B may be simply brought into contact with each other as shown in Fig. 4, thereby to form the boss member 7. This allows the boss member 7 to be disassembled easily and replaced with another boss member 7 corresponding to another mounting bolt 11 having a different combination of the diameters of the first male threaded portion 1 and the second male threaded portion 2.

The retainer pin 4 relative to the nut 6 may also have a retaining function for the nut 6 by being inserted into a pin hole penetrating through both the nut 6 and the second male threaded portion 2.

The boss member 7 is provided for easily supporting the supporting body 19 to be rotatable about the bolt axis. Instead, the boss member 7 is dispensable and a bolt bore may be provided in the trunnion 13 for directly receiving the mounting bolt 11.

Although the reference numbers are assigned as noted above for easy comparison with the drawings, it is not intended to limit the present invention to the structures shown in the drawings. Naturally, various modifications are possible without departing from the scope of the claims of the present invention.

### INDUSTRIAL USABILITY

The swingable connecting member of the present invention is configured to be mounted on a target object to be raised by a crane, for example, to change a mounting position of the target object or transport the target object.

## Claims

1. A swingable connecting device (B) comprising:
a shackle (5);
a supporting body (19) capable of being screwed to a target object through a mounting bolt (11); and
an oscillation supporting mechanism for swingably supporting the shackle (5) to the supporting body (19), the oscillation supporting mechanism being formed b providing a retainer member (5) for allowing connecting holes formed in a pair of leg portions (5a) of the shackle (5) to fit on a pair of shaft portions (14) integrally formed with the supporting body (19) and having smooth outer circumferential surfaces, thereby to prevent the leg portions (5a) from removing from the shaft portions (14),
wherein the mounting bolt (11) is a double-ended bolt having a large-diameter first male threaded portion (1) and a small-diameter second male threaded portion (2) formed separately at opposite ends thereof and having different diameters from each other,
wherein a bolt shaft (3) portion whose diameter varies continously from the first male threaded portion (1) to the second male threaded portion (2) is formed between the first male threaded portion (1) and the second male threaded portion (2),
wherein the large-diameter first male threaded portion (1) serves as a connecting portion relative to the target object,
wherein the supporting body (19) is provided with a bolt hole (10) for allowing the bolt shaft portion (3) to fit into and engage with the bolt bore (10), through which the small-diameter second male threaded portion (2) extends,
wherein the bolt bore (10) has an inner surface profile, in which an inner diameter thereof continuously varies with an outer circumferential surface of the bolt shaft portion (3), and
wherein a nut (6) is screwed to the second male threaded portion (2) extending through the bolt bore (10) with the bolt shaft portion (3) being fitted to the bolt bore (10), thereby to retain the mounting bolt (11) to be integrally connected to the supporting body (19).

2. The swingable connecting device (B) as claimed in claim 1, wherein a rotation supporting mechanism is provided between the mounting bolt (11) and the supporting body (19) for supporting the shackle (5) to the mounting bolt (11) to be relatively rotatable about an axis of the mounting bolt (11).

## Patentansprüche

1. Schwenkbare Anschlussvorrichtung (B) mit:
einem Bügel (5),
einem Stützkörper (19), der in der Lage ist, an ein Zielobjekt mittels eines Befestigungsbolzens (11) angeschraubt zu werden, und
einem Oszillationsunterstützungsmechanismus, um den Bügel (5) schwenkfähig am Stützkörper (19) zu lagern, wobei der Oszillationsunterstützungsmechanismus gebildet wird, indem ein Arretierungsbauteil (S) vorgesehen ist, um zu ermöglichen, dass Verbindungslöcher, die in einem Paar von Fußteilen (5a) des Bügels (5) ausgebildet sind, an ein Paar von Schaftteilen (14) angepasst werden, die ganzheitlich mit dem Stützkörper (19) ausgebildet sind und glatte äußere Umfangsflächen aufweisen, um dadurch zu verhindern, dass sich die Fußteile (5a) von den Schaftteilen (14) abheben,
wobei der Befestigungsbolzen (11) ein doppelseitiger Bolzen ist, der einen ersten Außengewindeteil (1) mit einem großen Durchmesser und einen zweiten Außengewindeteil (2) mit einem kleinen Durchmesser aufweist, die getrennt an dessen gegenüberliegenden Enden ausgebildet sind und Durchmesser aufweisen, die sich voneinander unterscheiden,
wobei ein Bolzenschaftteil (3), dessen Durchmesser sich stufenlos von dem ersten Außengewindeteil (1) zum zweiten Außengewindeteil (2) hin verändert, zwischen dem ersten Außengewindeteil (1) und dem zweiten Außengewindeteil (2) ausgebildet ist,
wobei der erste Außengewindeteil (1) mit einem großen Durchmesser als ein Verbindungsteil mit Bezug auf das Zielobjekt dient,
wobei der Stützkörper (19) mit einem Bolzenloch (10) versehen ist, um zu ermöglichen, dass der Bolzenschaftteil (3) in die Bolzenbohrung (10) eingepasst wird und in sie eingreift, durch die hindurch sich der zweite Außengewindeteil (2) mit dem kleinen Durchmesser erstreckt,
wobei die Bolzenbohrung (10) ein Innenflächenprofil aufweist, bei dem sich ein Innendurchmesser davon stufenlos mit einer Außenumfangsfläche des Bolzenschaftteils (3) verändert, und
wobei eine Gewindemutter (6) auf den zweiten Außengewindeteil (2) geschraubt ist, der sich durch die Bolzenbohrung (10) hindurch erstreckt, wobei der Bolzenschaftteil (3) an die Bolzenbohrung (10) angepasst ist, um dadurch den Befestigungsbolzen (11) zu arretieren, um ganzheitlich mit dem Stützkörper (19) verbunden zu sein.

2. Schwenkbare Anschlussvorrichtung (B) nach Anspruch 1, wobei ein Drehungsunterstützungsmechanismus zwischen dem Befestigungsbolzen (11) und dem Stützkörper (19) vorgesehen ist, um den Bügel (5) am Befestigungsbolzen (11) so abzustützen, dass er um eine Achse des Befestigungsbolzens (11) herum bedingt drehbar ist.

## Revendications

1. Dispositif de connexion capable de pivoter (B) comprenant :
une manille (5),
un corps de support (19) apte à être vissé sur un objet cible au moyen d'un boulon de montage (11), et
un mécanisme de support à oscillation pour faire supporter de manière pivotante la manille (5) au corps de support (19), le mécanisme de support à oscillation étant formé en prévoyant un élément de retenue (S) pour permettre à des trous de connexion formés dans une paire de parties de branche (5a) de la manille (5) de s'adapter sur une paire de parties de tige (14) formées d'un seul tenant avec le corps de support (19) et ayant des surfaces circonférentielles extérieures lisses, de manière à empêcher les parties de branche (5a) de se retirer des parties de tige (14) ;
dans lequel le boulon de montage (11) est un boulon à double extrémité comportant une première partie filetée mâle de grand diamètre (1) et une seconde partie filetée mâle de petit diamètre (2) formées séparément au niveau de ses extrémités opposées et ayant des diamètres différents l'une par rapport à l'autre,
dans lequel une partie de tige de boulon (3), dont le diamètre varie de manière continue depuis la première partie filetée mâle (1) jusqu'à la seconde partie filetée mâle (2), est formée entre la première partie filetée mâle (1) et la seconde partie filetée mâle (2),
dans lequel la première partie filetée mâle de grand diamètre (1) sert de partie de connexion par rapport à l'objet cible,
dans lequel le corps de support (19) est pourvu d'un trou de boulon (10) pour permettre à la partie de tige de boulon (3) de s'insérer à l'intérieur et de venir en prise avec le trou de boulon (10), au travers duquel la seconde partie filetée mâle de petit diamètre (2) s'étend,
dans lequel le trou de boulon (10) a un profil de surface intérieure dans lequel son diamètre intérieur varie de manière continue en fonction d'une surface circonférentielle extérieure de la partie de tige de boulon (3), et
dans lequel un écrou (6) est vissé à la seconde partie filetée mâle (2) s'étendant au travers du trou de boulon (10) avec la partie de tige de boulon (3) qui est insérée dans le trou de boulon (10), pour ainsi retenir le boulon de montage (11) afin d'être connecté de manière solidaire au corps de support (19).

2. Dispositif de connexion capable de pivoter (B) selon la revendication 1, dans lequel un mécanisme de support à rotation est prévu entre le boulon de montage (11) et le corps de support (19) afin de faire supporter la manille (5) au boulon de montage (11) pour être relativement rotatif autour d'un axe du boulon de montage (11).
